Europäisches Patentamt

European Patent Office

Office européen des brevets

(11) Publication number: **0 478 040 A2**

# EUROPEAN PATENT APPLICATION

(21) Application number: **91202244.9**

(22) Date of filing: **03.09.91**

(51) Int. Cl.5: **H04N 9/88**, H04N 7/13

(30) Priority: **28.09.90 US 589966**

(43) Date of publication of application:
**01.04.92 Bulletin 92/14**

(84) Designated Contracting States:
**AT CH DE FR GB IT LI NL SE**

(71) Applicant: **AMPEX CORPORATION**
**401 Broadway M.S. 3-35**
**Redwood City California 94063-3199(US)**

(72) Inventor: **Williams, Robert A.**
**1167 Laureles Drive**
**Los Altos, California 94022(US)**

(74) Representative: **Horton, Andrew Robert Grant**
**et al**
**BOWLES HORTON Felden House Dower**
**Mews High Street**
**Berkhamsted Hertfordshire HP4 2BL(GB)**

(54) Four direction adaptive error concealment system for component digital television signals.

(57) An error concealment technique for component television signal systems evaluates video pixels surrounding an erroneous video pixel P(0,0) in four different directions, and determines which direction of surrounding pixels provides the best replacement value for the erroneous pixel. The technique includes calculating disparity values in each direction, weighting the disparity values with coefficients modified in response to any corrupted pixels in the pixels surrounding the erroneous pixel. The coefficients also may be adjusted in accordance with critical picture material. The weighted and modified disparity values are compared, and the preferred least disparity value is selected. The video pixels are supplied to four filters (44,46,48,50), wherein optimum filter coefficients are simulated to provide the maximum bandwidth and minimum ripple in the frequency response to any corrupted pixels in the surrounding pixels. The least disparity value selects the preferred filter and the filtered pixel value thereof is used to replace the erroneous pixel.

FIG. 2

## BACKGROUND OF THE INVENTION

The invention relates to an error concealment system for component digital signal systems and, in particular, to an error concealment system which evaluates pixels in four different directions around an erroneous pixel, determining which direction provides the best replacement value while uniquely weighting the values, and then using the best replacement value for concealment of the erroneous pixel.

As is well known in the art, errors occur in the handling of video signals such as, for example, when recording and reproducing television signals via magnetic tape record/reproduce systems. Such errors occur for example, due to noise or to dropouts occurring during the record/reproduce process, and cause the corruption of the reproduced signals. That is, the reproduced television signal does not correspond exactly to the original signal, and the resulting television picture is degraded.

There are two main approaches to dealing with errors in digital television signals. The first approach is error correction, which involves production and use of additional data signals purely for the purposes of error detection and correction, wherein the additional data signals otherwise are redundant. While the error correction process provides preferred results, it requires an excessive amount of additional data and thus cannot generally be used as the sole means of dealing with errors.

The second approach is error concealment, and is the process of concern in this application. Concealment utilizes the replacement of a corrupted data signal by a data signal generated from available uncorrupted data signals. In the field of television, the concealment approach relies largely on the strong correlation that exists in a television signal, to provide accuracy. In the case of such television signals which contain large amounts of redundancy, individual bits usually do not contain vital information. Thus knowledge of errors in the signal may be exploited to maintain acceptable signal quality. It may be said then that the error concealment process simply consists of hiding the error. For example, if an error detector indicates that the digital word corresponding to a pixel, that is, to a video sample, contains an error that cannot be corrected, such error may be hidden by replacing the erroneous pixel by an interpolated pixel whose value closely approximates what would be the correct pixel value.

As well known in the art, there are various interpolation techniques used in providing error concealment in either a television composite signal system, or a component signal system, which techniques include, for example, previous pixel repetition, extrapolation using two or more previous pixels and interpolation between preceding and following pixels.

Typical of error concealment techniques used in component signal systems, are schemes which determine the amount of information from pixels which extend in a selected direction along a line passing through an erroneous pixel. More particularly, such schemes provide a replacement pixel for the erroneous pixel by averaging pixels in a selected direction if the information in said direction is less than a preselected threshold, and by averaging pixels in another direction if the information in said direction is greater than the selected threshold. The more typical of such schemes generally uses only two directions of adaptive filtering, uses simple averaging filters, and requires that all surrounding samples be error free. This limits the type of picture material and the error levels generally preferred for adequate concealment. In addition, such systems generally implement the adaption process by looking only in a single direction, that is, in the horizontal direction.

In an alternate typical concealment scheme, a replacement pixel may be provided from pixels extending in four directions from the erroneous pixel. However, the replacement pixels taken from any of the directions lie along a single line which passes through the erroneous pixel. The correction value in the direction having the smallest value is used to replace the erroneous pixel. In the event one pixel in a particular direction is incorrect, the accumulated value derived from that line of pixels is discarded entirely. Thus, the replacement values from one or more directions may be discarded in their entirety, and are not used in any way to calculate the optimum concealment replacement value. It follows therefore that this system requires that all surrounding samples be error free. Although this scheme is preferred to the two direction scheme of previous mention, it does not provide an optimized concealment system since it does not utilize all adjacent surrounding pixels that are good in the calculation for a replacement pixel, but instead discards good adjacent pixels in any direction in which an erroneous pixel is found.

## SUMMARY OF THE INVENTION

The present invention overcomes the shortcomings of the prior art in that it provides preferred concealment of errors in a component television signal system under more varied picture and error conditions. To this end, the invention system replaces an initial erroneous pixel by evaluating, for example, on the order of ten or more correct pixels which completely surround the erroneous pixel, weighting the disparity values in each direction with weighting coefficients modified to compensate for the fact that a surrounding corrupted pixel or pixels has been deleted from the calculation for the replacement sample. The weighting coefficients also are adjusted in accordance with a known test pattern which represents a most acceptable television picture. The resulting least disparity value is used to select the corresponding filter which supplies the optimum replacement pixel. The filter coefficients also are modified in response to any surrounding corrupted pixel.

In particular, the invention determines the disparities between pairs of adjacent pixels surrounding the erroneous pixel in each of four directions, such as the horizontal, vertical, left diagonal and right diagonal directions. To this end, first the disparities between the four directions are calculated from selected pairs of surrounding samples by summing the differences between pairs. The summations of each direction are weighted with respective weighting coefficients which are modified to reflect any error pattern in the surrounding pixels. In addition, the weighting coefficients are adjusted further in accordance with a simulation of critical picture material as provided by a test pattern such as that known in the television field as a "circular zone plate". Thus, a weighted and modified disparity value is provided for each direction. The weighted and modified disparity summations for each direction then are compared to each other. The disparity value corresponding to the direction with the least disparity is selected to provide a select signal for selecting the filter which has the best frequency response, that is, the filter adapted to the direction corresponding to the least disparity value.

The selected filter also is adaptively selected in accordance with the previously discussed error pattern in surrounding pixels. That is, the coefficients of each directional filter also are modified depending upon any corrupted surrounding pixels, to ensure that only error free pixels are used by the filter, while not discarding any information gained by using good pixels surrounding the initial erroneous pixel in any of the directions. The resulting pixel sample value derived by the adaptive filtering process and, in particular the selected filter, is used as the replacement data for the initial erroneous pixel.

In summation, the advantageous features discussed above provide better concealment under more varied picture and error conditions than afforded by the prior art. In accordance with these advantages, the present invention provides an error concealment technique for a component television signal system which sums disparities in each of four directions. The technique then selectively weights and modifies the sums before comparing them to each other to determine the direction from which concealing information is taken, without discarding any valid information. The invention's error concealment technique also adaptively uses the associated one of four directions of filtering to provide the concealment data, wherein coefficients of each directional filter are modified depending upon the errors in the surrounding pixels. The selected filter thereby provides the optimum frequency response even though the direction selected for deriving the replacement information includes an incorrect pixel.

BRIEF DESCRIPTION OF THE DRAWINGS

FIG. 1 is a pictorial view of an initial erroneous pixel and of an exemplary array of horizontal and vertical pixels which surround the erroneous pixel and which are used to provide error concealment in accordance with the invention.

FIG. 2 is a block diagram illustrating an implementation of the error concealment technique of the invention combination.

FIGs. 3A-3D and 4A, 4B are block and schematic diagrams depicting in further detail, typical implementations of various components of the block diagram of FIG. 2, by way of example only.

DESCRIPTION OF THE PREFERRED EMBODIMENTS

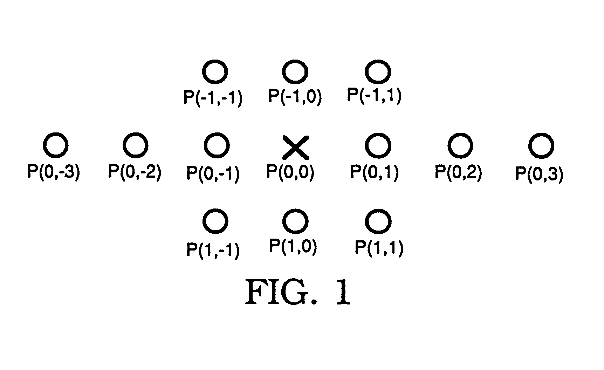

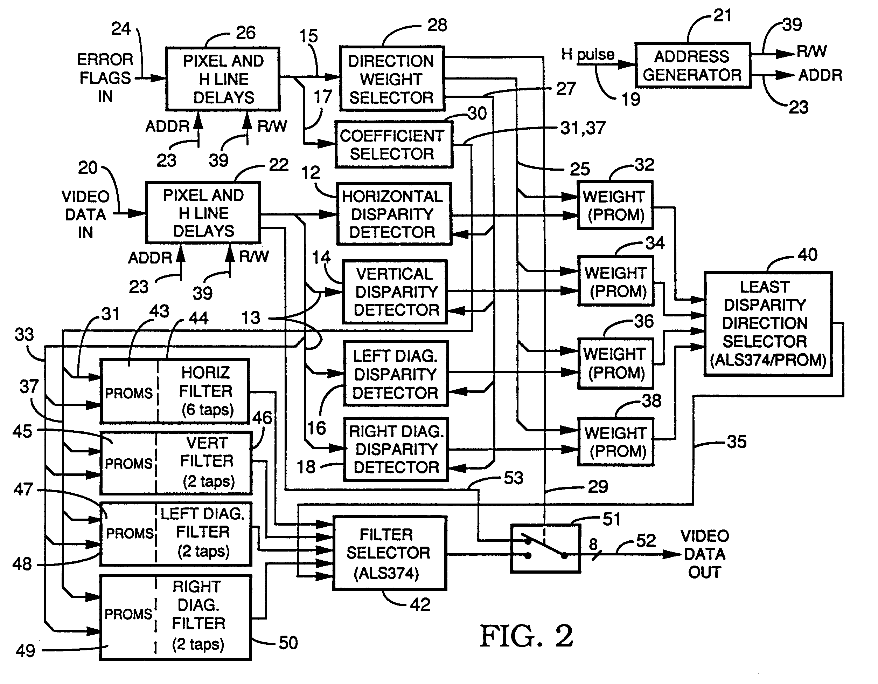

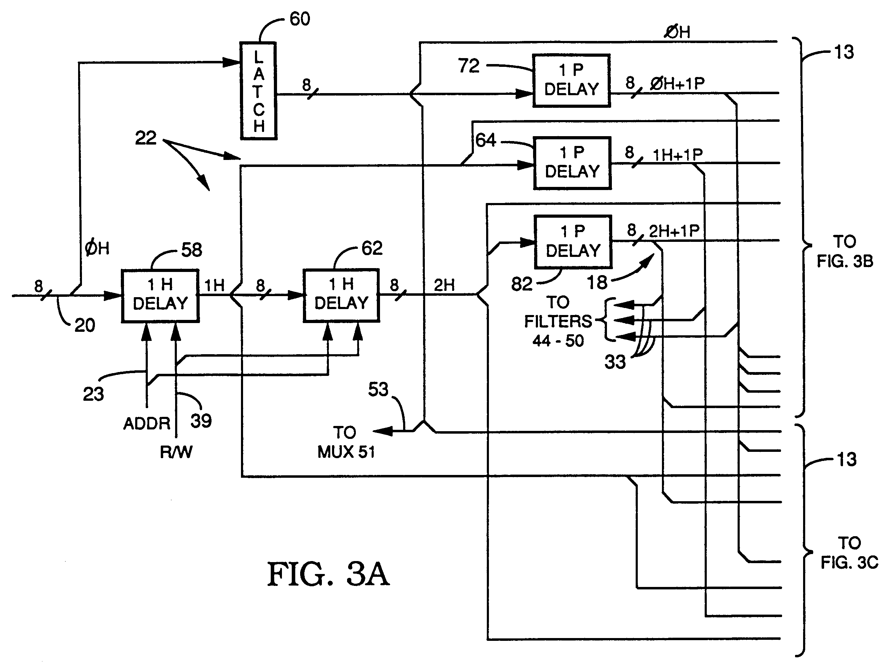

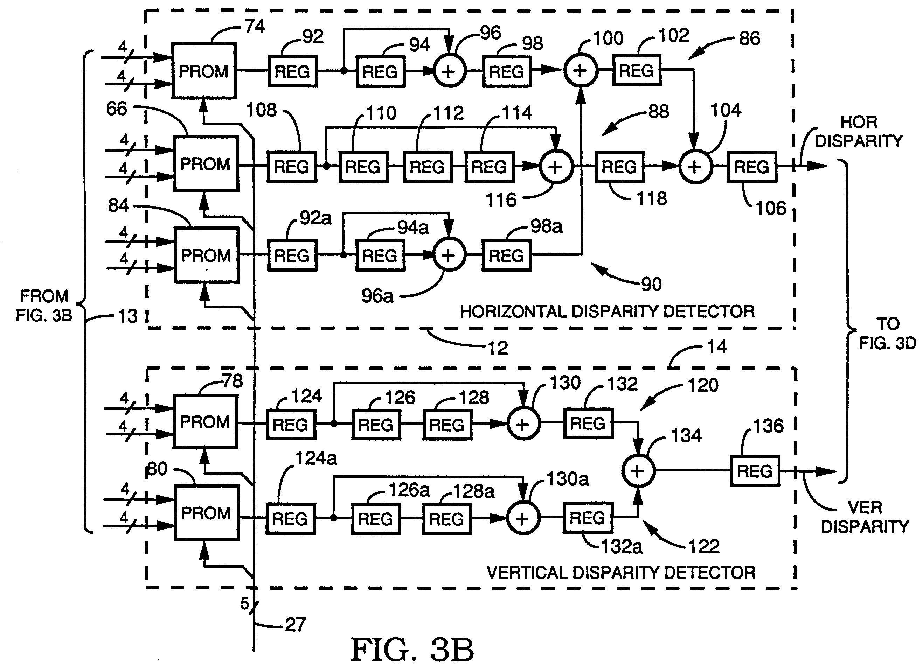

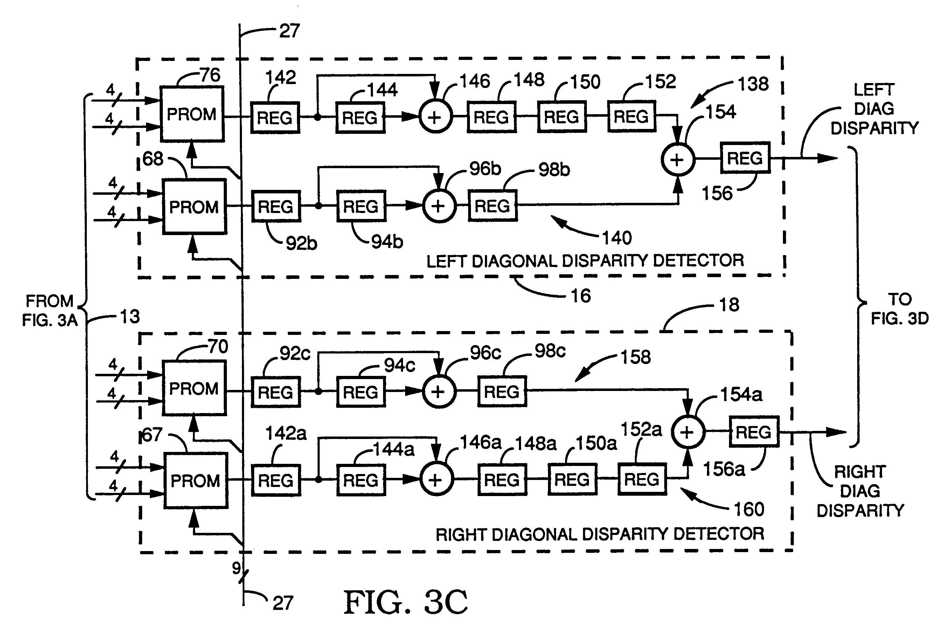

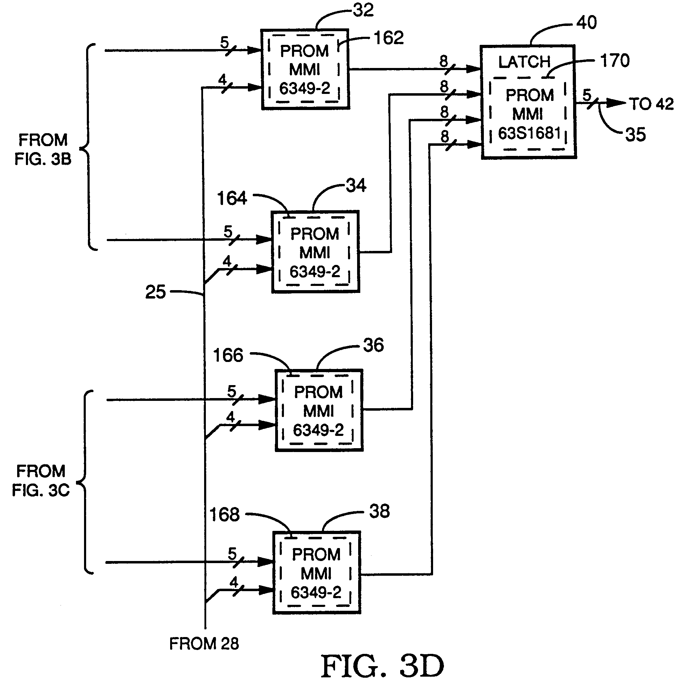

Referring to FIG. 1, there is depicted a plurality of pixels disposed about an initial erroneous pixel. Correct pixels are designated by a O, while the erroneous pixel is designated by an X. In addition, each pixel is identified individually by the letter P and a pair of co-ordinate numbers ± 0, 1, 2, etc., so as to identify its position relative to the erroneous pixel, which is itself identified as the erroneous pixel P(0, 0). By way of example only, each pixel is digitally coded in eight bits and is accompanied by an error flag of 1 bit, which indicates whether an associated surrounding pixel is corrupted. The digital samples corresponding to the erroneous pixel P(0,0) and the surrounding pixels are made available in a serial stream as described hereinbelow in the discussion of Figures 2 and 3. In accordance with the invention, and by way of example only, the technique generally provides three pixels each from the preceding and following horizontal lines, that is, the immediately adjacent or surrounding lines, and three each from the preceding and following pixels on the same horizontal line. For each direction which is taken, namely, the vertical, horizontal, left and right diagonals of Figure 1, a measure of disparity is calculated as follows:

horizontal:

sum of the magnitudes of

P(-1,-1)-P(-1,0), P(-1,0)-P(-1,1),
P(0,-2)-P(0,-1), P(0,1)-P(0,2),
P(1,-1)-P(1,0), P(1,0)-P(1,1).
vertical:
sum of the magnitudes of
P(-1,-1)-P(0,-1), P(0,-1)-P(1,-1),
P(-1,1)-P(0,1), P(0,1)-(1,1).
left diagonal:
sum of the magnitudes of
P(0,-2)-P(1,-1), P(0,-1)-P(1,0),
P(-1,0)-P(0,1), P(-1,1)-P(0,2).
right diagonal:
sum of the magnitudes of
P(0,-2)-P(-1,-1), P(0,-1)-P(-1,0),
P(1,0)-P(0,1), P(1,1)-P(0,2).

It may be seen that, in each of the four directions, replacement information is derived by selecting pixels from lines which occur before and after the line which contains the erroneous pixels, and/or from pixels which occur before and after the erroneous pixel on the same line. Thus, replacement information, or samples, are taken from pixels which surround the erroneous pixel, in each of the four directions. The surround arrangements for each direction are exemplified by the above algorithms.

As illustrated by the algorithms, the disparity for each direction is calculated by determining the difference between pairs of adjacent pixels, or samples, and then taking the sum of the differences of the pairs in each of the directions. The four summations provide four disparity values, which then are weighted by multiplying the values by respective weighting coefficients. The values of the weighting coefficients reflect the occurrence, in the surrounding pixels, of one or more erroneous pixels, wherein the invention technique discards any erroneous pixel to prevent its use in the calculation of the disparity values, and modifies the weighting of the remaining good pixels to account for the discarded pixel. Thus, in accordance with the invention, the weighting coefficients are modified in accordance with the error pattern in the pixels surrounding the erroneous pixel, which are used to derive the replacement sample. Such a surrounding pixel arrangement is depicted in Figure 1. In addition, the weighting coefficients are further adjusted in accordance with the inherent critical picture material of a television picture as derived via a test pattern which, for example, may be a circular zone plate pattern. Such a pattern is generated, for example, by a zone plate generator Model 524, manufactured by Vg Electronics Limited, England.

Accordingly, if any pixel required for a disparity calculation in a given direction is in error, its difference relative to an adjacent pixel as represented by the terms in the algorithms, is discarded to prevent inaccurate results in the summation. That is, the respective term in any of the algorithms is discarded from the calculation of the associated disparity value. Further, the disparity calculations which discard such a corrupted pixel are modified by selectively modifying the weighting coefficients to account for the loss of the adjacent corrupted pixel or pixels in the calculation.

The disparity calculations are performed by the circuitry depicted in FIG. 2, and particularly by four disparity detectors 12, 14, 16 and 18, corresponding to the horizontal, vertical, left diagonal and right diagonal direction, respectively, depicted in the pixel arrangement of FIG. 1. An input bus 20 provides the input video data corresponding to the succession of pixel samples, to a pixel and horizontal (H) line delay circuit 22 which, in turn, is coupled to the detectors 12-18 via a bus 13. An error flag accompanying each pixel and indicating whether it is erroneous, is derived via a usual error correction detection circuit (not shown) such as, for example, a dropout compensation circuit, and is supplied to another pixel and H line delay circuit 26 via an input line 24. The selectively delayed error flags are supplied to a direction weight selector 28, and to a coefficient selector 30 via respective buses 15 and 17, as further described in FIG. 3A. An address generator 21 is responsive to a timing clock such as a horizontal sync pulse (Hsync) on a line 19, and provides, inter alia, the usual address signals (ADDR) as well as read/write signals, (R/W) to the the memory circuits of pixel and H line delays 22 and 26 via respective buses 23, 39.

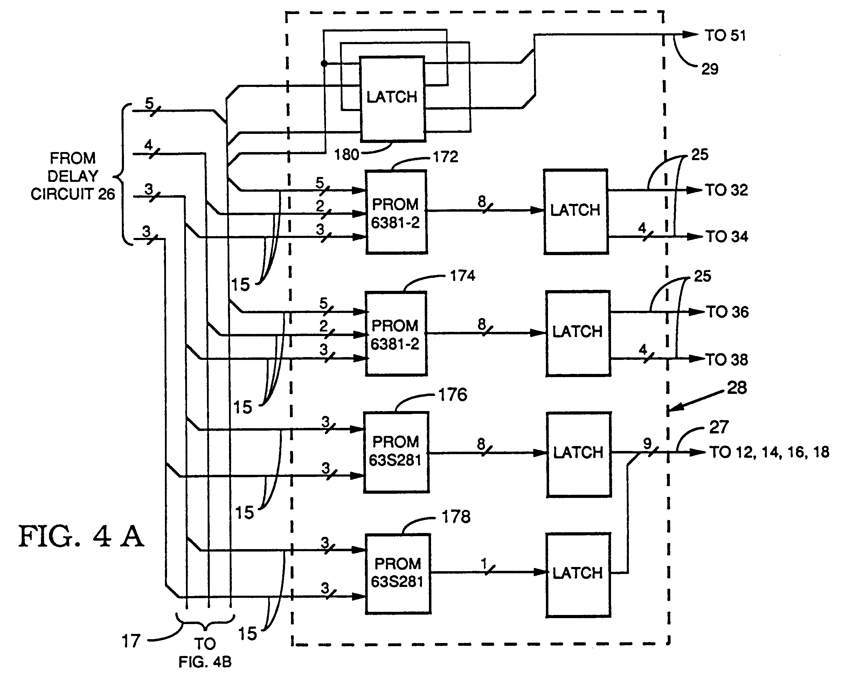

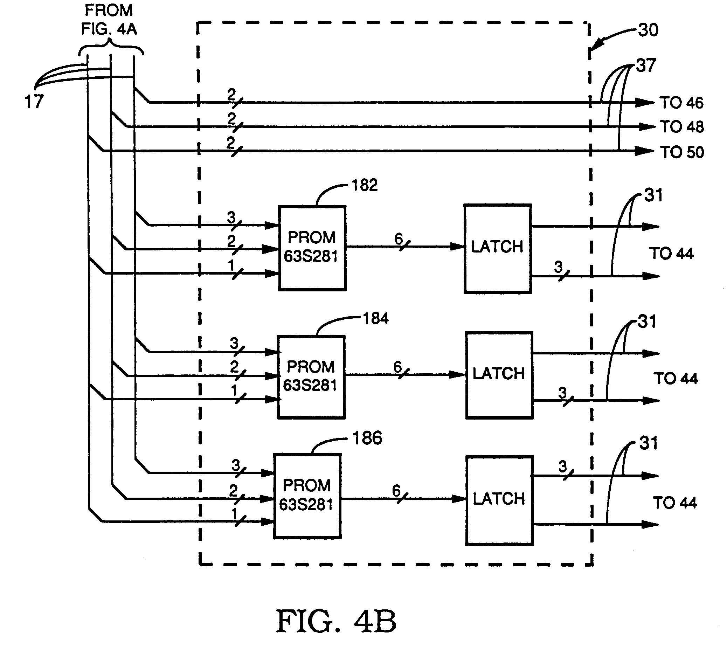

The horizontal, vertical, left diagonal and right diagonal disparity detectors 12-18 are coupled to respective weighting circuits 32, 34, 36 and 38. The weighting circuits 32-38 also are coupled via a bus 25 to the direction weight selector 28, which provides select signals in the form of digital values which modify the weighting coefficients in accordance with any error pattern in the pixels surrounding the erroneous pixel P(0,0). These values correspondingly modify the algorithms and thus the respective disparity calculations, in response to the surrounding corrupted pixel or possible combination of surrounding corrupted pixels. The direction weight selector 28 also supplies the disparity detectors 12-18 with inhibit signals via a bus 27, which disable a specific channel of any disparity detector which would contribute to calculating a disparity value based upon a corrupted pixel value. The weighting circuits 32-38 are coupled to a least disparity direction selector 40 which selects the minimum weighted and modified disparity value and direction, and supplies the minimum disparity value as a filter select control signal to a filter selector 42 via a bus 35. The generation of the least disparity value, and the modification of the weighting coefficients and of the filter coefficients, is further described below with reference to the circuits of FIGs. 3, 4.

The coefficient selector 30 is coupled via a bus 31 to a PROM 43 at the input of the horizontal filter 44, and via a bus 37 to respective PROMs 45, 47 and 49 at the inputs of the vertical, left diagonal and right diagonal filters 46, 48 and 50 respectively. The selector 30 outputs on bus 31 are shown further in FIG. 4B. The variously delayed video data signals from circuit 22 also are supplied to the filters 44-50 via a bus 33, as further shown in FIG. 3A. In turn, the filters 44-50 are coupled to the filter selector 42 via respective buses. The filtering process is adaptive in that, in response to the least disparity value on line 35, the filter selector 42 selects the filter whose direction corresponds to the direction of the associated disparity detector which supplies the least disparity value, and that filter is used to provide the replacement data for the erroneous pixel. That is, the selector 42 selects the filtered output signal from the filter with the best frequency response, and supplies it via an 8 bit bus to a multiplexer 51. A bus 53 is coupled from the pixel and H line delay circuit 22 to the multiplexer 51, and supplies the non-delayed current ($\emptyset$H) video data signal directly to the multiplexer 51 while bypassing the filters 44-50. The multiplexer 51 is switched via a digital signal on a bus 29, which corresponds to an error flag and indicates the presence or absence of an error flag for each video pixel. Thus, the multiplexer 51 provides means for inserting a replacement pixel for an erroneous pixel in response to the error flag on line 29, or for bypassing the video data around the filters in the absence of erroneous pixels and positive error flags. The multiplexer provides the video data output signal on an output bus 52.

The filter coefficients for each filter 44-50 are selected to produce the maximum possible bandwidth with a minimum acceptable level of ripple, and may be determined by computer simulation in generally conventional manner. However, as in the disparity value calculations, the filter coefficients are modified via the signals on buses 31, 37 in accordance with the surrounding pixel error pattern to discard any corrupted pixel or pixels from the calculation, while further adjusting the filter coefficients to compensate for the discarded pixel or pixels of the error pattern. In addition, the filter coefficients are adjusted in accordance with the circular zone plate pattern of previous mention, to apply the conventional standard for critical picture material. The filters 44-50 are finite impulse response (FIR) filters of generally known configuration. Filter 44 is a six tap digital FIR filter, while filters 46-50 each are two tap digital FIR filters.

In operation, the video data in the form of the succession of video samples, are introduced to the pixel and H line delay circuit 22, are selectively delayed to provide current line ($\emptyset$H), one line (1H) and two lines (2H) delayed video signals, as well as current line plus one pixel ($\emptyset$H + 1P), one line plus one pixel (1H + 1P) and two lines plus one pixel (2H + 1P) delayed video signals, as further shown in FIG. 3A. The $\emptyset$H + 1P, 1H + 1P and 2H + 1P delayed video signals are supplied to the filters 44-50 via the bus 33, as further depicted in FIG. 3A. In addition, various ones of the line, and/or line and pixel, delayed video signals are supplied to the disparity detectors 12-18, as also depicted in FIG. 3A. Each of the disparity detectors 12-18 calculates the amount of disparity in its respective direction, as illustrated in the algorithms of previous description, whereby each detector provides a digital indication of the value of the disparity at its respective output. Each disparity calculation is multiplied by a respective weighting coefficient calculated for that direction. The weighting coefficients are modified by the weighting circuits 32-38 which adjust the disparity values in response to the error pattern of the surrounding pixels used to calculate the respective disparity value. The modification is determined by the control signals supplied by the direction weight selector 28 via the bus 25. In the event that there are no corrupted surrounding pixels, the select signals reflect that no modification need be made to the weighting of the respective disparity value. The weighting coefficients also are adjusted in response to the critical picture material standard as previously mentioned and further described below. The weighted and modified disparity values for each of the four directions are compared in the least disparity direction selector 40 to determine the direction with the least disparity, thereby determining the associated filter of the filters 44-50 which will provide the best concealment value for the erroneous pixel. The selector 40 supplies the optimum minimum value as a select signal to the filter selector 42 via the bus 35 to enable the selection of the optimum filtered output.

Analogously, the error flag signals indicative of erroneous samples, that is, pixels, are similarly delayed in the pixel and H line delay circuit 26, to provide current line ($\emptyset$H), one line (1H) and two lines (2H) delayed error flag signals, as well as current line plus one pixel ($\emptyset$H + 1P), one line plus one pixel (1H + 1P) and two lines plus one pixel (2H + 1P) delayed error flag signals. More particularly, a ninth bit of each sample is supplied as the error flag input on line 24. It follows that the error flag for each video pixel is maintained in synchronism with the video pixel as it is processed through the error concealment circuit. Thus, not only is the initial erroneous pixel identified, but also any corrupted surrounding pixel which might be used to provide a replacement pixel. As previously mentioned, it is undesirable to use a corrupted surrounding pixel to calculate the replacement pixel since it would degrade the resulting calculation. Accordingly, the present error concealment system discards the corrupted surrounding pixel, or pixels, from the calculation in which the corrupted pixel would be used. Even further, however, the invention also further modifies the weighting coefficients for each direction in response to the deletion of the corrupted surrounding pixel, or pixels, from the disparity direction calculation. This improves the accuracy of the calculation, since the deletion of a pixel difference value substantially changes the result of the calculation. However, the coefficients of the remaining good pixels used in the calculation should be further adjusted to compensate for the effect of the discarded pixel on the calculation. Thus, modifying the weighting in accordance with the remaining good pixels compensates for the surrounding error pattern in the calculation to provide an optimum replacement pixel for the erroneous pixel. If all surrounding pixels are good, no modification is made to the weighting values.

To further clarify the preference for using the minimum disparity value to determine the optimum filter, the values from directions which have much disparity, by definition have very high frequency components spatially. These high frequency components may cause large distortions, producing objectionable pixel replacement values. It follows that the direction with the least disparity amongst its pixels has the greatest probability of being able to replace the erroneous pixel accurately. Thus, it is this direction of minimum disparity that is selected by the least disparity direction selector 40 to determine the optimally filtered output.

The initial weighting values used to weight the disparity values derived for each direction are computer simulated by programming into a computer the critical picture material in a television picture using, for example, the circular zone plate pattern. The computer simulation of weighting values representative of critical picture material is per se generally known.

In addition, the filter coefficients for each filter 44-50 are selected to provide the maximum bandwidth with the least ripple to provide the optimum frequency response for each filter. If the surrounding pixels are all valid, no modification is made to the computer simulated coefficients of the filters. However, if a surrounding pixel is corrupted, then the affected pixel is withdrawn from use in the calculation and the respective filter coefficients are further modified in accordance with the error pattern of the corrupted pixel or pixels. To this end, the signals on buses 31, 37 are reflective of the modifications to be made to the filter coefficients given the particular error pattern. More particularly, the four filters 44-50 provide filtering in the respective four directions. The horizontal filter 44 uses three adjacent pixels on either side of the erroneous pixel P(0,0) which is to be replaced (FIG. 1). This use of three pixels increases the bandwidth over an adjacent pixel averaging filter by a factor of about two, providing more accurate pixel replacement on finely detailed picture material. The vertical filter 46 and the diagonal filters 48, 50, use an averaging technique to derive filtering. The filter selector 42 provides the adaptive selection of one of the filtered outputs of the filters 44-50, and supplies the preferred replacement data derived from the surrounding good pixels as the video data output on the output bus 52 via the multiplexer 51.

Referring now to FIGs. 3A-3D, the pixel and H line delay circuit 22 and the plurality of disparity detectors 12-18 of FIG. 2, are exemplified in greater detail. The input bus 20 supplies the current input video signal (ØH) in an 8 bit format, to the pixel and H line delay circuit 22 and, in particular, to a first horizontal line (1H) delay 58 and a register 60. The register re-times the current input video signal. The 1H delayed signal from delay 58 is supplied to a second 1H delay 62, to a 1P delay 64, and also is supplied to a programmable read only memory (PROM) 66 in the horizontal disparity detector 12 (FIG. 3B), and to respective PROMs 68, 70 of the left and right diagonal disparity detectors 16, 18, respectively (FIG. 3C). The 1H + 1P delayed signal from 1P delay 64 also is supplied to the PROM 66, and to a PROM 67 of the right diagonal disparity detector 18. The latched signal from register 60 is supplied to a 1P delay 72, and to a PROM 74 and a PROM 76 in the detectors 12 and 16, respectively. The ØH + 1P delayed signal from the delay 72 also is supplied to the PROM 74, as well as to a pair of PROMs 78, 80 of the vertical disparity detector 14 (FIG. 3B), and to the PROMs 76,70 of the detectors 16, 18, respectively (FIG. 3C).

The 2H delayed signal from the 1H delay 62 is supplied to a 1P delay 82, to a PROM 84 in the horizontal disparity detector 12, and to the PROM 67 of the detector 18. The 2H + 1P delayed signal from the 1P delay 82 also is supplied to the PROM 84 of detector 12 and to the PROMs 80 and 68 of the detectors 14 and 16, respectively.

The 1H delays 58, 62 are supplied with the address signal ADDR via the bus 23 and also with the read/write R/W control signal via the bus 39 of previous mention in FIG. 2, which signals provide control of the random access memories (RAM) (not shown) conventionally employed in horizontal line delay circuits. It may be seen that the various 1H and 1P delays of the circuit 22 are disposed to supply the four disparity detectors 12-18 with variously delayed samples corresponding to the surrounding adjacent lines of pixels taken from different horizontal lines of video before, during and after the line in which the erroneous pixel is found, as illustrated in FIG. 1. The digital values of the variously delayed pixels along respective directions are employed in the algorithms of previous discussion, to provide the respective disparity values via the horizontal, vertical, left diagonal and right diagonal detectors 12-18, as further described below.

To this end, the similar PROMs of the disparity detectors 12-18 calculate an absolute magnitude of the difference between two input values by subtracting one value from the other, in the absence of an inhibit signal thereto on the bus 27. The PROMs of the disparity detectors 12-18 provide the subtraction of the adjacent pairs of pixels, and thereby implement the subtraction processes of the four algorithms of previous discussion. In the event that a pixel is corrupted, the associated delayed error flag from the error flag delay circuit 26 constitutes the inhibit signal on the bus 27, which disables any PROM in which the corrupted pixel is to be used, in the corresponding channel of any of the disparity detectors 12-18. In this latter instance, the disabled PROM outputs a zero binary signal. The PROMs are capable of performing mathematical calculations other than subtraction as maybe desired, but it was found that subtraction provided a preferable calculation. The PROMs may be replaced by a gate array chip including, for example, a comparator to determine if an input value is greater or less than zero, and taking the negative of the value if it is less than zero. Thus, the disparity detectors are not limited to the use of PROMs as depicted herein by way of example.

In FIGs. 3B, 3C the most complicated of the disparity detectors is the horizontal detector 12 since it uses the largest number of surrounding pixels on the previous, following, and the same line before and after the erroneous pixel, to perform the associated calculation in accordance with its respective more complex algorithm shown previously. That is, there are $2^6$ possible calculations which can be made since there are three pixels prior to, and following, the erroneous pixel, and three pixels above and below the erroneous pixel, and since modifications to the weighting coefficients are made in response to the error pattern of the surrounding adjacent pixels from which the replacement pixel is to be calculated. Thus, in the horizontal disparity detector 12, there are three channels of electronics 86, 88, 90, commensurate with the prior, current and following horizontal lines relative to the position of the erroneous pixel P(0,0), as shown in FIG. 1 and defined by the horizontal disparity algorithm. It follows that the surrounding pixels are taken from lines of video which are current (ØH), are one line (1H) delayed, and are two line (2H) delayed. These correspondingly line delayed pixels, as well as the pixels which are delayed by an additional one pixel (1P) of delay, are supplied to the PROMs 74, 66 and 84 via the bus 13 from the pixel and H line delay circuit 22.

In turn, PROM 74 of channel 86 is coupled in electrical series to a latch or register 92, to another register 94, to an adder 96, to a further register 98, to another adder 100, to still another register 102, followed by an adder 104 and register 106 in channel 88. The output of the register 92 also is supplied as a second input to the adder 96. The output of register 106 is supplied to the weighting circuit 32 (FIG 3D), and is the horizontal disparity value.

The PROM 66 in channel 88 is coupled in electrical series to a register 108, to three consecutive registers 110, 112, 114, to an adder 116, to a register 118, and thence to the second input of the adder 104 of previous mention. The output of the register 108 also is coupled to a second input of the adder 116.

The PROM 84 of channel 90 is serially coupled to the same configuration of registers and adders as is the PROM 74 of channel 86, and thus similar numerals designate similar components, with the letter "a" designating components of the channel 90. The output of the last register 98a of the channel 90 is coupled to a second input of the adder 100 in channel 86.

The three channels 86-90 of the horizontal disparity detector 12 illustrate circuitry for implementing the horizontal algorithm of previous discussion, wherein the three adjacent pixels on the lines above and below an erroneous pixel, and the three pixels prior to, and after, the erroneous pixel on the same horizontal line, are used to calculate a horizontal disparity value.

In the vertical disparity detector 16, there are two electronic channels 120, 122 commensurate with the two vertical rows of pixels prior to and following the vertical pixel row which contains the erroneous pixel, as shown in FIG. 1 and defined in the vertical disparity algorithm. Thus in channel 120, the PROM 78 is coupled in electrical series to a register 124, to two consecutive registers 126, 128, to an adder 130, to a register 132, and thence to a first input of an adder 134 and to a register 136. The output of the register 124 also is coupled to a second input of the adder 130. The register 136 supplies the vertical disparity value to the weighting circuit 34 of previous mention and further shown in FIG. 3D.

The PROM 80 in the channel 122 is serially coupled to the same configuration of registers and adder as is the PROM 78 of channel 120, with similar components similarly numbered and with a letter "a" designating the components of channel 122. The output of the register 124a is coupled to a second input of the adder 130a. The output of the register 132a is coupled to the second input of the adder 134. It may be seen that channels 120 and 122 are identical.

The two channels 120, 122 of the vertical disparity detector 14 illustrate circuitry for implementing the vertical algorithm of previous discussion, wherein pixels before and after the erroneous pixel, on lines before, during and after the pixel, are used to calculate a vertical disparity value.

In the left diagonal disparity detector 16, there are two electronic channels 138, 140 commensurate with two left diagonal rows of pixels prior to and following the left diagonal pixel row which contains the erroneous pixel, as shown in FIG. 1 and defined in the left diagonal disparity algorithm. In the channel 138, the PROM 76 is coupled in electrical series to a register 142, to another register 144, to a first input of an adder 146, to a consecutive series of registers 148, 150, 152, and thence to an adder 154 and a register 156, wherein the latter supplies the left diagonal disparity value to the weighting circuit 36 of previous mention and further shown in FIG. 3D. The output of the register 142 also is coupled to a second input of the adder 146.

The PROM 68 in the channel 140 is coupled to the same electronic configuration of registers and adders as are the PROMs 74 and 84 of channels 86 and 90, respectively, and thus the similar components are similarly numbered with the letter "b" designating the components of channel 140. The output of the register 92b is coupled to a second input of the adder 96b. The output of the register 98b is coupled to a second input of the adder 154.

The two channels 138, 140 of the left diagonal disparity detector 16 illustrate circuitry for implementing the left diagonal algorithm of previous discussion, wherein pixels before and after the erroneous pixel, along left diagonal pixel rows before and after the pixel, are used to calculate a left diagonal disparity value.

In the right diagonal disparity detector 18, there are two electronic channels 158, 160 commensurate with two right diagonal rows of pixels prior to and following the right diagonal pixel row which contains the erroneous pixel, as shown in FIG. 1 and defined in the right diagonal disparity algorithm. It may be seen that the channel 158, which includes the PROM 70, is identical to the registers and adder configuration of the channel 140 of the left diagonal disparity detector 16 (and also channels 86 and 90 of the horizontal detector 12). It follows that like components are similarly numbered with a letter "c" designating the components of channel 158. Likewise, the channel 160, which includes the PROM 67, is identical to the registers and adder configuration of the channel 138 of the left diagonal disparity detector 16. Thus like components are similarly numbered with a letter "a" designating the components in the channel 160. The outputs of the registers 98c, 152a of channels 158, 160, respectively, are coupled to respective inputs of an adder 154a and thence to a register 156a which supplies the right diagonal disparity value to the weighting circuit 38 of previous mention and shown in FIG. 3D.

The two channels 158, 160 of the right diagonal disparity detector 18 illustrate circuitry for implementing the right diagonal algorithm of previous discussion, wherein pixels before and after the erroneous pixel, along right diagonal pixel rows before, and after the pixel, are used to calculate a right diagonal disparity value.

The PROMs in the detectors 12-18 may be MMI 63S241 manufactured by Monolithic Memory, Inc.

As depicted in FIG. 3D, the horizontal, vertical, left and right diagonal disparity values are supplied via 5 bit buses to respective weighting circuits 32-38, each of which includes a PROM 162, 164, 166, 168, respectively, such as a MMI-6349-2, followed by a timing register (not shown) such as an LS374. The PROMs 162-168 of the weighting circuits 32-38 are controlled, for example, by means of 4 bit binary select signals supplied via the bus 25 of previous discussion extending from the direction weight selector 28, as further described in FIG. 4A below. The 8 bit binary values from the weighting circuits 32-38 are supplied to the least disparity direction selector 40, which comprises a plurality of magnitude comparators (not shown) such as LS684, followed by a PROM 170 such as a MMI 63S1681 from Monolithic Memory, Inc.

The PROMs 162-168 in the weighting circuits 32-38 provide the weighting coefficients which are applied to the respective disparity values derived by the disparity detectors 12-18. The weighting coefficients are adjusted commensurate with the critical picture material using a circular zone plate pattern and a number of iterations in a subjective process. The adjustment also can be made thru a simulation process on a computer. In addition, a plurality of numbers corresponding to any possible locations of a surrounding corrupted pixel, or pixels, and which are modified to account for the corrupted pixel being discarded from the calculation, are stored in the respective PROMs. Thus, the PROMs 162-168 in effect contain a representative plurality of lookup tables corresponding to all possible weighting coefficients. The weighting coefficients thus are modified in response to an error pattern in the surrounding pixels. The modification of the weighting actually is accomplished via the select signals on bus 25 (further shown in FIG. 4A) which select the proper weighting values from those stored in the respective PROM, depending upon which of the surrounding pixel, or pixels, is corrupted. If there are no corrupted surrounding pixels, no modification is selected, and the original weighting coefficient is applied.

The magnitude comparators provide four disparity values to the PROM 170 in the least disparity direction selector circuit 40 and the PROM decodes the values and supplies the least disparity value in the form of, for example, a 5 bit digital signal, on the bus 35 extending to the filter selector 42.

FIG. 4A, 4B illustrate an implementation of the direction weight selector 28 and the coefficient selector, 30, which supply the control signals for the various disparity detectors 12-18 via the bus 27, for the weighting circuits 32-28 via the bus 25, for the filters 44-50 via the buses 31, 37 and for the erroneous pixel inserting multiplexer 51, all of previous description relative to FIGs.. 2, 3A-3D. The digital various line, and line and pixel, delayed signals are supplied by the error flag pixel and H line delay circuit 26 via the buses 15, 17, (FIG. 4A), and comprise digital values of various numbers of bits representative of the variously delayed error flag signals indicative of associated erroneous or corrupted video pixels. The error flag delay circuit 26 is similar in electrical configuration to the video signal pixel and H line delay circuit 22 in that it applies the identical time delays to the error flags which identify the initial erroneous video pixel, and the corrupted surrounding video pixel or pixels, as are experienced by the video pixels themselves. Thus, the error flag delay circuit 26 supplies via the buses 15 and 17, error flag signals which have no delay ØH (are current error flags), which are 1H and 2H delayed, and which are ØH + 1P, 1H + 1P and 2H + 1P delayed, error flag signals.

The direction weight selector circuit 28 of FIG. 4A includes PROMs 172, 174 and 176, 178 which are supplied with the variously delayed error flag signals on bus 15. The PROMs 172, 174 may be MMI 6381-2, and the PROMs 176, 178 may be 63S281 PROMs. The PROMs 172-178 are coupled via 8 bit buses to respective timing latches whose outputs provide the controls for modifying the weighting coefficients by means of discarding corrupted surrounding samples in response to error flags, and adjusting the calculations performed via the algorithms commensurate with the lack of the sample in the calculation. That is, the invention technique not only discards a corrupted surrounding pixel from the calculation for a replacement pixel value, but further adjusts the weighting of the remaining good surrounding pixels to compensate for the discarded pixel. To this end, the four control signals from the direction weight selector are supplied via bus 25 to respective weighting circuits 32-38 and in particular, to respective PROMs 162-168 therein, to select the specific weighting value stored therein which corresponds to the existing error pattern. Likewise, the control signals from the coefficient selector 30 comprise a 9 bit digital word on the bus 27, wherein a single bit thereof is supplied to a disable input of the respective PROMs 67, 70, 68, 76, 80, 78, 84, 66 and 74 of the disparity detectors 12-18. The bit disables the PROM, and the corresponding channel, in the event that an associated error flag indicates the presence of a corrupted pixel.

A register 180 provides the previously mentioned control signal on bus 29, (FIG. 2), which switches the multiplexer 51 to select the output from the filter selector 42 as a replacement value in the event that the video signal experiences an erroneous pixel, or to select the current video signals supplied to the multiplexer 51 via the bus 53 (FIG. 3A) when there are no erroneous pixels in the video signal.

In similar manner, the coefficient selector 30 (FIG. 4B) provides control signals to the filters 44 and 46-50, via the buses 31 and 37, respectively, which signals are supplied to respective pluralities of PROMs 43, 45, 47, 49 of the filters, and provide for adjusting the filter coefficients commensurate with the existing error pattern. Filter 44 has six PROMs represented by numeral 43, and each filter 46-50 has two PROMs represented by respective numerals 45, 47, 49. Thus, the coefficient selector 30 performs essentially the same function for the plurality of filters 44-50 that the direction weight selector 28 performs for the plurality of disparity detectors 12-18. That is, the selector 30 of FIGs. 2 and 4B is responsive to the error flag pixel and H line delay circuit 26 and thus to any error pattern in the pixels surrounding an erroneous pixel, to modify accordingly the original filter coefficients digitally stored in the pluralities of PROMs 43-49 in the filters 44-50. If there is no corrupted pixel in the surrounding pixels then no modification is made to the original filter coefficients used to provide the replacement pixel. That is, the PROMs 43-49 output the binary numbers which represent the original filter coefficients in response to the select signals on the buses 31 and/or 37. If there is a corrupted pixel, then the select signals on buses 31 and/or 37 select in essence, a lookup table of a predetermined set of lookup tables, wherein each table corresponding to a filter coefficient accounts for the fact that there is a surrounding corrupted pixel that is to be discarded, and that accordingly a lesser number of pixels are available for use in the filtering process. In this way, the filter coefficients are selected and modified to maintain the maximum bandwidth with a minimum level of ripple.

The controls for the relatively simple two tap FIR filters 46-50 are 2 bit digital words supplied to each filter via the buses 17 and 37 (FIG. 4B), which causes the modification to the respective filter coefficients in response to a corrupted sample in the samples surrounding the erroneous pixel which are used by the respective filter. However, controls for the more complicated horizontal six tap FIR filter 44 are provided via PROMs 182, 184, 186 coupled at their inputs to selected delayed signals on bus 17 and at their outputs to respective timing registers. The latter supply the six select control signals in the form of 3 bit digital words to each of the six PROMs 43 in the horizontal filter 44 via the bus 31.

These and additional features and advantages will be apparent from the description and drawings herein, and thus the scope of the invention is defined by the following claims and their equivalents.

## Claims

1. Apparatus for concealing an erroneous data sample in a sampled data signal, by replacing the erroneous sample with a concealment sample derived from neighboring samples, comprising: means (12,14,16,18) for determining for each of a plurality of directions disparity values in accordance with summations of differences of samples taken in the respective directions; means (32,34,36,38) for weighting the disparities in each direction with respective weighting coefficients in response to any corrupted samples in the surrounding adjacent samples; means (40) for selecting a direction having the least weighted disparity value; and means (44,46,48,50), controllable by the selecting means for filtering said neighboring samples in the direction of the least disparity value, to provide a concealment sample which optimally replaces the erroneous sample.

2. Apparatus according to claim 1, and including means responsive to a pictorial test pattern for adjusting the weighting coefficients commensurate with a simulation of critical picture material.

3. Apparatus according to claim 1 or 2, wherein the weighting means is responsive to an error flag signal indicative of a corrupted sample to discard the corrupted sample from the adjustment while modifying the weighting coefficient to compensate for the discarded corrupted sample.

4. Apparatus according to claim 3, wherein the weighting means is responsive to said error flag signal for modifying the weighting coefficients in accordance with the location of the corrupted sample.

5. Apparatus according to any foregoing claim, wherein the filtering means includes: a filter (44,46,48,50) associated with each of said plurality of directions; means (43,45,47,49) responsive to said corrupted samples for providing for each filter respective filter coefficients which represent the maximum bandwidth and minimum ripple in the frequency response of the filter; and switch means (42) responsive to the selecting means for selecting the filter which has the optimum frequency response to provide the optimum concealment sample.

6. Apparatus according to claim 5 wherein the providing means further includes: means responsive to a corrupted sample for adjusting each filter's coefficients to minimize in its frequency response the inherent negative effect of a corrupted sample.

7. Apparatus according to any foregoing claim, wherein: said determining means (12 - 18) provides a summation for each direction of a plurality of digital differences between adjacent pairs of samples taken along the lines of samples of the corresponding direction.

8. Apparatus according to any of claims 1 to 7, wherein the directions are horizontal, vertical, left diagonal and right diagonal relative to the erroneous sample, and the samples are taken from lines including or surrounding the line containing the erroneous sample.

9. Apparatus according to claim 8 wherein the disparities for the different directions are calculated as follows:
    horizontal:
    sum of the magnitudes of
    P(-1,-1) - P(-1,0), P(-1,0) - P(-1,1),
    P(0,-1) - P(0,-1), P(0,1) - P(0,2),
    P(1,-1) - P(1,0), P(1,0) - P(1,1),
    vertical:
    sum of the magnitudes of
    P(-1,-1) - P(0,-1), P(0,-1) - P(1,-1),
    P(-1,1) - P(0,1), P(0,1) - P(1,1),
    left diagonal:
    sum of the magnitudes of
    P(0,-2) - P(1,-1), P(0,-1) - P(1,0),
    P(-1,0) - P(0,-1), P(-1,1) - P(0,2),
    right diagonal:
    sum of the magnitudes of
    P(0,-2) - P(-1,-1), P(0,-1) - P(-1,0),

P(1,0) - P(0,1), P(1,1) - P(0,2), wherein the letter P stands for "pixel", and the numerals in the parentheses are co-ordinate numbers which identify the surrounding pixels positions relative to an erroneous pixel P(0,0).

10. A method of concealing an erroneous data sample in a sampled data signal, by replacing the erroneous sample with a concealment sample derived from surrounding adjacent samples, comprising the steps of: calculating disparity values taken from samples in a plurality of successive lines and a plurality of respective directions surrounding the erroneous sample; weighting the disparity values in respective directions with weighting coefficients indicative of any corrupted samples in the surrounding adjacent samples; determining a minimum disparity value in a corresponding direction; and filtering the surrounding adjacent samples of the selected direction in response to the minimum disparity value and with a corresponding filter adapted to provide the optimum signal frequency response.

11. A method according to claim 10 wherein the step of filtering includes providing respective filter coefficients which provide an optimum frequency response; and modifying the filter coefficients in accordance with said any corrupted samples.

12. A method according to claim 11, including: supplying error flags indicative of the erroneous sample and of any corrupted sample in the surrounding adjacent samples; and modifying the weighting coefficients of the disparity values and the filter coefficients in response to the error flags.

13. A method according to any of claims 10 to 13, wherein the step of weighting includes: discarding from the calculation a corrupted sample in the surrounding adjacent samples of the selected direction; and adjusting the weights of remaining valid samples in the surrounding adjacent samples to compensate for the discarded corrupted sample.

14. A method according to any of claims 10 to 13, including: modifying the weighting coefficients of the disparity values in response to a simulation of critical picture material.

15. A method according to any of claims 10 to 14, wherein the step of calculating includes: finding the differences between pairs of adjacent samples; and summing the differences in each of the plurality of directions to provide the respective disparity values.

16. Apparatus for concealing an erroneous pixel with a replacement pixel whose value is derived from a plurality of pixels in the neighborhood of the erroneous pixel, comprising: means (24) for supplying error flag signals indicative of the erroneous pixel and of any corrupted pixel in the neighborhood of pixels; means (12,14,16,18) for determining for each of a plurality of directions values indicating disparities between pixels in the respective direction; means (32,34,36,38) for providing weighting coefficients in response to indications of any corrupted pixels in the neighborhood; and means (40) for selecting for filtration to provide the replacement pixel valid pixels in the direction which exhibits the least weighted disparity value.

EP 0 478 040 A2

○ ○ ○
P(-1,-1)　P(-1,0)　P(-1,1)

○　○　○　✕　○　○　○
P(0,-3)　P(0,-2)　P(0,-1)　P(0,0)　P(0,1)　P(0,2)　P(0,3)

○ ○ ○
P(1,-1)　P(1,0)　P(1,1)

FIG. 1

FIG. 2

FIG. 3A

FIG. 3B

EP 0 478 040 A2

FIG. 3C

EP 0 478 040 A2

FIG. 3D

EP 0 478 040 A2

FIG. 4 A

EP 0 478 040 A2

FIG. 4B